# EUROPEAN PATENT SPECIFICATION

(11) **EP 3 664 339 B1**
(45) Date of publication and mention of the grant of the patent: **22.10.2025**
(21) Application number: 18840644.1
(22) Date of filing: 02.08.2018
(51) Int. Cl.: H04L 1/18, H04W 74/08, H04W 72/04

(54) **DATA TRANSMISSION METHOD, AND DATA DETECTION METHOD AND DEVICE**
DATENÜBERTRAGUNGSVERFAHREN SOWIE DATENDETEKTIONSVERFAHREN UND -VORRICHTUNG
PROCÉDÉ DE TRANSMISSION DE DONNÉES, DISPOSITIF ET PROCÉDÉ DE DÉTECTION DE DONNÉES

(30) Priority: 03.08.2017 CN 201710657545
(43) Date of publication of application: 10.06.2020
(73) Proprietor: Vivo Mobile Communication Co., Ltd., Dongguan, Guangdong 523860 (CN)
(72) Inventor: CHEN, Xiaohang, Dongguan Guangdong 523860 (CN); PAN, Xueming, Dongguan Guangdong 523860 (CN)
(74) Representative: Conti, Marco
(86) International application number: PCT/CN2018/098299
(87) International publication number: WO 2019/024890

(56) References cited:
- CN-A- 103 312 473
- CN-A- 104 734 821
- CN-A- 105 743 619
- CN-A- 106 941 397
- US-A1- 2017 163 388
- GUANGDONG OPPO MOBILE TELECOM: "Discussions on uplink grant-free transmission", vol. RAN WG1, no. Athens, Greece; 20170213 - 20170217, 12 February 2017 (2017-02-12), XP051209124, Retrieved from the Internet <URL:http://www.3gpp.org/ftp/Meetings_3GPP_SYNC/RAN1/Docs/> [retrieved on 20170212]
- HUAWEI ET AL: "UL Grant-free transmission", vol. RAN WG1, no. Athens, Greece; 20170213 - 20170217, 12 February 2017 (2017-02-12), XP051208832, Retrieved from the Internet <URL:http://www.3gpp.org/ftp/Meetings_3GPP_SYNC/RAN1/Docs/> [retrieved on 20170212]
- NOKIA ET AL: "UE identification and HARQ for URLLC UL grant-free", vol. RAN WG1, no. Qingdao, China; 20170627 - 20170630, 17 June 2017 (2017-06-17), XP051305292, Retrieved from the Internet <URL:http://www.3gpp.org/ftp/tsg_ran/WG1_RL1/TSGR1_AH/NR_AH_1706/Docs/> [retrieved on 20170617]
- HUAWEI ET AL: "UE identification and HARQ combining for grant-free transmissions", vol. RAN WG1, no. Qingdao, China; 20170627 - 20170630, 17 June 2017 (2017-06-17), XP051304732, Retrieved from the Internet <URL:http://www.3gpp.org/ftp/tsg_ran/WG1_RL1/TSGR1_AH/NR_AH_1706/Docs/> [retrieved on 20170617]

## Description

### TECHNICAL FIELD

The present disclosure relates to the field of wireless communication technology, in particular to a data transmission method, a data detection method and devices.

### BACKGROUND

As compared with a conventional mobile communication system, an on-coming 5^{th}-Generation (5G) mobile communication system needs to be adapted to more diversified scenarios and service requirements. Principal New Radio (NR) scenarios include Enhanced Mobile Broadband (eMBB), massive Machine Type of Communication (mMTC) and Ultra-Reliable and Low Latency Communications (URLLC), and in these scenarios, the system is highly demanded in terms of high reliability, low latency, large bandwidth and wide coverage. With respect to these service requirements, a grant-free transmission mode is supported by the NR system, so as to reduce signaling interaction, thereby to ensure the low latency.

During the transmission of a service where the reliability is highly demanded, the NR system may support a User Equipment (UE) to perform repeated transmission, including initial transmission and repetition, on a same Transport Block (TB) for service data at a plurality of transmission time points. In a conventional scheme, when the same TB is transmitted repeatedly by the UE, it is impossible for a base station to differentiate the initial transmission from the repetition, so it is impossible for the base station to combine the received data effectively.

Non-patent literature named "Discussions on uplink grant-free transmission" discusses the design of uplink grant-free transmission to support URLLC.

Non-patent literature named "UL Grant-free transmission" discusses the remaining issues for the completion of design of grant-free scheme at least for URLLC in NR SI.

Non-patent literature titled "UE identification and HARQ combining for grant-free transmissions" (R1-1709992) discusses some details on UE identification for grant-free (GF) transmission, especially on the use of DMRS for user detection.

### SUMMARY

The present disclosure has solved the above problem as defined in the attached claims.

In one aspect, the present disclosure provides in some embodiments a data transmission method performed by a UE as claimed in accompanying claims.

In another aspect, the present disclosure provides in some embodiments a data detection method performed by a base station as claimed in accompanying claims.

In yet another aspect, the present disclosure provides in some embodiments a UE as claimed in accompanying claims.

In still yet another aspect, the present disclosure provides in some embodiments a base station as claimed in accompanying claims.

### BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
FIG. 1 is a schematic view showing time-frequency-domain resources corresponding to grant-free resources configured by a base station for a UE according to one embodiment of the present disclosure;
FIG. 2 is another schematic view showing the time-frequency-domain resources corresponding to the grant-free resources configured by the base station for the UE according to one embodiment of the present disclosure;
FIG. 3 is a schematic view showing a data transmission method according to a first embodiment of the present disclosure;
FIG. 4 is another schematic view showing the data transmission method according to a second embodiment of the present disclosure;
FIG. 5 is yet another schematic view showing the data transmission method according to a third embodiment of the present disclosure;
FIG. 6 is still yet another schematic view showing the data transmission method according to a fourth embodiment of the present disclosure;
FIG. 7 is a schematic view showing a UE according to a fifth embodiment of the present disclosure;
FIG. 8 is another schematic view showing the UE according to a sixth embodiment of the present disclosure; and
FIG. 9 is a schematic view showing a base station according to a seventh embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

The present disclosure provides in some embodiments a data transmission method for a UE, which includes, when the UE is configured with at least two grant-free resources, transmitting one TB on one grant-free resource or on one grant-free resource group. Each grant-free resource group includes at least two grant-free resources, and the transmission of the TB includes initial transmission and repetition.

According to the embodiments of the present disclosure, when the UE is configured with at least two grant-free resources, the initial transmission or repetition of one TB is performed on one grant-free resource or on one grant-free resource group. As a result, it is able for a base station to jointly detect the initial transmission and the repetition of the same TB on the one grant-free resource or on the one grant-free resource group, thereby to improve the detection performance.

The UE may be a wireless UE or a wired UE. The wireless UE may be a device capable of providing voice data and/or any other service data to a user, e.g., a handheld device having a wireless connection function, or any other processing device capable of being connected to a wireless modem. The wireless UE may communicate with one or more core networks via a Radio Access Network (RAN). The wireless UE may be a mobile terminal, e.g., a mobile phone (or cellular phone), or a computer having the mobile terminal, e.g., a portable, pocket-sized, handheld, built-in or vehicle-mounted mobile device, which are capable of exchanging voice and/or data with the RAN. For example, the wireless UE may be a Personal Communication Service (PCS) telephone, a cordless telephone, a Session Initiation Protocol (SIP) phone, a Wireless Local Loop (WLL) station, or a Personal Digital Assistant (PDA). In addition, the wireless UE may also be called as system, subscriber unit, subscriber station, mobile station, mobile, remote station, remote terminal, access terminal, user terminal, user agent or user device, which will not be particularly defined herein.

In the embodiments of the present disclosure, each grant-free resource may refer to a grant-free resource configured by the base station for an uplink (UL) of the UE. The UE may transmit service data to the base station on the grant-free resource. When the service data is transmitted to the base station on the grant-free resource, it is able to reduce the signaling interaction, thereby to meet the requirement of low latency.

In the embodiments of the present disclosure, the at least two grant-free resources configured for the UE may also be grouped, and each grant-free resource group includes at least two grant-free resources. In a possible embodiment of the present disclosure, the grant-free resource groups may include a same amount of or different amounts of grant-free resources. Further, the at least two grant-free resources in a same grant-free resource group may use different time-frequency-domain resources.

In the embodiments of the present disclosure, the UE is capable of supporting the repeated transmission of the service data at a plurality of transmission time points, i.e., a same TB corresponding to the service data may be transmitted from K times (K is a positive integer greater than or equal to 1), and the repeated transmission may include the initial transmission and the repetition, so as to ensure the service reliability and improve the reception performance of the base station.

In a possible embodiment of the present disclosure, subsequent to transmitting the one TB on the one grant-free resource, the data transmission method may further include switching the transmission of a next TB buffered in the UE to another grant-free resource. Alternatively, subsequent to transmitting the one TB on the one grant-free resource group, the data transmission method may further include switching the transmission of a next TB buffered in the UE to another grant-free resource group. In this way, it is able to prevent the occurrence of a collision between the pieces of transmitted data.

In a possible embodiment of the present disclosure, the transmitting the one TB on the one grant-free resource group may include transmitting the one TB on one or more grant-free resources in the one grant-free resource group.

In a possible embodiment of the present disclosure, when the one TB is transmitted on the one or more grant-free resources in the one grant-free resource group, the one TB may be transmitted on one grant-free resource in the one grant-free resource group, or on at least two grant-free resources in the one grant-free resource group in a hopping manner, i.e., the same TB may be transmitted for one time on one grant-free resource in the one grant-free resource group, transmitted for a next time on another grant-free resource in the one grant-free resource group, and so on.

For example, when the one grant-free resource group merely includes two grant-free resources, the same TB may be transmitted at least twice on the two grant-free resources in the same grant-free resource group alternately. For instance, the same TB may be transmitted for the first time on a first grant-free resource in the one grant-free resource group, transmitted for the second time on a second grant-free resource in the one grant-free resource group, transmitted for the third time on the first grant-free resource in the one grant-free resource group, and transmitted for the fourth time on the second grant-free resource in the one grant-free resource group, and so on.

In the embodiments of the present disclosure, when the one TB is transmitted on the one grant-free resource group, different hopping modes may be adopted by different UEs, so as to prevent the occurrence of the collision between the data transmitted by the UEs using the same grant-free resource group.

In the embodiments of the present disclosure, the UE may also support the transmission of the data to the base station using at least two Hybrid Automatic Repeated Request (HARQ) processes simultaneously, so as to further reduce a waiting time period for the transmission of the service data. Identically, when the data is transmitted by the UE using a plurality of HARQ processes, in the related art, it is impossible for the base station to differentiate these HARQ processes from each other, so it is impossible for the base station to combine the received data effectively.

In order to solve the problem that the base station cannot differentiate the HARQ processes from each other, the data transmission method may further include transmitting a TB corresponding to one HARQ process on a corresponding grant-free resource or grant-free resource group in accordance with a correspondence between the HARQ processes and the grant-free resources or grant-free resource groups.

In a possible embodiment of the present disclosure, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

When different HARQ processes correspond to different grant-free resources or different grant-free resource groups, the base station is capable of differentiating the HARQ processes from each other in accordance with the grant-free resources or grant-free resource groups adopted by the UE, so it is able to improve the detection performance.

When there is at least one grant-free resource or grant-free resource group corresponding to at least two HARQ processes, the transmitting the TB corresponding to one HARQ process on the corresponding grant-free resource or grant-free resource group includes carrying indication information in Uplink Control Information (UCI). The indication information is used to indicate the HARQ process used for the transmission of the TB on a current grant-free resource or a current grant-free resource group.

To be specific, the indication information may be a process identity of each HARQ process corresponding to the current grant-free resource or the current grant-free resource group, or indication information indicating that data transmitted using each HARQ process corresponding to the current grant-free resource or the current grant-free resource group is new data. As a result, it is able for the UE is to differentiate the different HARQ processes from each other in accordance with the indication information.

The indication information may be represented by one bit or at least two bits.

In the embodiments of the present disclosure, the data transmission method may further include receiving the at least two grant-free resources configured by the base station.

In the embodiments of the present disclosure, different grant-free resources may correspond to different time-frequency-domain resources, e.g., correspond to different time-domain resources and a same frequency-domain resource, or correspond to different time-domain resources and different frequency-domain resources, or correspond to a same time-domain resource and different frequency-domain resources, so as to prevent the occurrence of data collision.

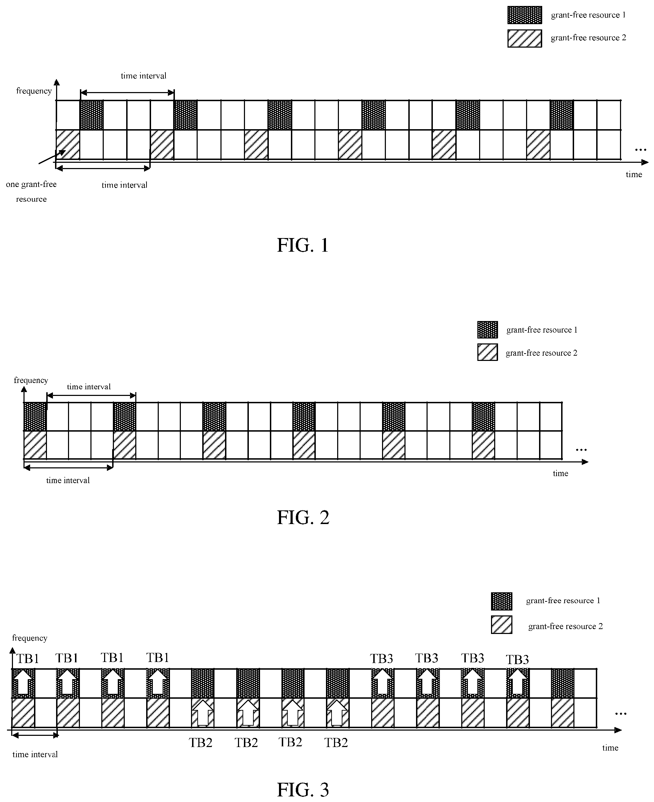

FIG. 1 is a schematic view showing the time-frequency-domain resources corresponding to the grant-free resources configured by the base station for the UE. In the embodiments of the present disclosure, the base station may configure two grant-free resources for the UE, i.e., resource 1 and resource 2. The resource 1 and the resource 2 may correspond to different time-domain resources and different frequency-domain resources. In FIG. 1, a horizontal axis represents time, a longitudinal axis represents frequency, and each block represents one time-frequency-domain resource.

FIG. 2 is another schematic view showing the time-frequency-domain resources corresponding to the grant-free resources configured by the base station for the UE. In the embodiments of the present disclosure, the base station may configure two grant-free resources for the UE, i.e., resource 1 and resource 2. The resource 1 and the resource 2 may correspond to different time-domain resources and different frequency-domain resources. In FIG. 2, a horizontal axis represents time, a longitudinal axis represents frequency, and each block represents one time-frequency-domain resource.

In the embodiments of the present disclosure, all the grant-free resources for the transmission of the service data may be activated grant-free resources. When each grant-free resource is deactivated, it is impossible to transmit the service data on the deactivated grant-free resource. Whether the grant-free resource is activated or deactivated may be configured by the base station.

The data transmission method will be described hereinafter in conjunction with the specific embodiments.

FIG. 3 shows the data transmission method according to a first embodiment of the present disclosure. In FIG. 3, the base station may configure two grant-free resources for the UE, i.e., resource 1 and resource 2. The resource 1 and the resource 2 may correspond to a same time-domain resource and different frequency-domain resources. In this embodiment, the quantity of the HARQ processes supported by the UE may be 1, and the transmission times K of the same TB (including the initial transmission and the repetition) may be 4.

The data transmission method in this embodiment will be described as follows.

When there is to-be-transmitted service data buffered in the UE, the UE may transmit a TB1 corresponding to the currently-buffered service data on the resource 1.

After the transmission of the TB1, when there is still to-be-transmitted service data buffered in the UE, the UE may transmit a TB2 corresponding to the currently-buffered service data on the resource 2.

After the transmission of the TB2, when there is still to-be-transmitted service data buffered in the UE, the UE may switch to the resource 1 and transmit a TB3 corresponding to the currently-buffered service data on the resource 1.

In this embodiment, the initial transmission and the repetition of the same TB may be performed on one grant-free resource. The base station may detect the continuous transmission on the grant-free resource, so as to jointly detect the repeated transmissions of the same TB, thereby to improve the detection performance.

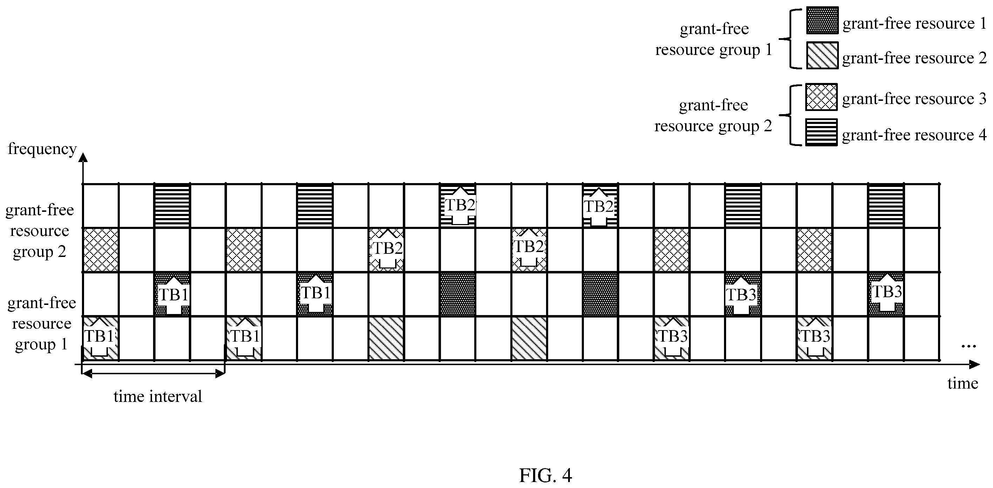

FIG. 4 is a schematic view showing the data transmission method according to a second embodiment of the present disclosure. In FIG. 4, the base station may configure four grant-free resources for the UE, i.e., resource 1, resource 2, resource 3 and resource 4. The resource 1 and the resource 4 may correspond to a same time-domain resource and different frequency-domain resources, and the resource 2 and the resource 3 may correspond to a same time-domain resource and different frequency-domain resources. The resource 1 and the resource 2 may constitute a resource group 1, and the resource 3 and the resource 4 may constitute a resource group 2. In this embodiment, it is presumed that the other parameters of the four grant-free resources (e.g., a modulation and coding scheme (MCS)) are the same. The quantity of the HARQ processes supported by the UE may be 1, and the transmission times K of the same TB (including the initial transmission and the repetition) may be 4.

The data transmission method in this embodiment will be described as follows.

When there is to-be-transmitted service data buffered in the UE, the UE may transmit a TB1 corresponding to the currently-buffered service data on the resource group 1. The TB1 may be transmitted on the resource 1 and the resource 2 in the resource group 1 in a hopping manner.

After the transmission of the TB1, when there is still to-be-transmitted service data buffered in the UE, the UE may transmit a TB2 corresponding to the currently-buffered service data on the resource group 2. The TB2 may be transmitted on the resource 3 and the resource 4 in the resource group 2 in a hopping manner.

After the transmission of the TB2, when there is still to-be-transmitted service data buffered in the UE, the UE may switch to the resource group 1 and transmit a TB3 corresponding to the currently-buffered service data on the resource group 1. The TB3 may be transmitted on the resource 1 and the resource 2 in the resource group 1 in a hopping manner.

In this embodiment, the initial transmission and the repetition of the same TB may be performed on one grant-free resource group. The base station may detect the continuous transmission on the grant-free resource group, so as to jointly detect the repeated transmissions of the same TB, thereby to improve the detection performance. In addition, the same TB may be transmitted several times on different grant-free resources in the same grant-free resource group in a hopping manner, so as to reduce the probability of collision.

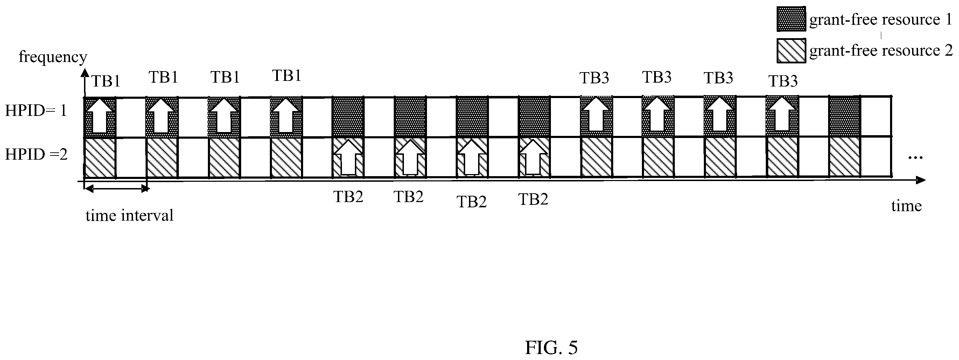

FIG. 5 is a schematic view showing the data transmission method according to a third embodiment of the present disclosure. In FIG. 5, the base station may configure two grant-free resources for the UE, i.e., resource 1 and resource 2. The resource 1 and the resource 2 may correspond to a same time-domain resource and different frequency-domain resources. The UE may support simultaneously two HARQ processes, with HARQ process identities (HPID) as 1 and 2 respectively. The resource 1 may be used to transmit a TB corresponding to the HARQ process with the HPID 1, and the resource 2 may be used to transmit a TB corresponding to the HARQ process with the HPID 2. The transmission times K of the same TB (including the initial transmission and the repetition) may be 4.

The data transmission method in this embodiment will be described as follows.

When there is to-be-transmitted service data buffered in the UE, the UE may transmit a TB1 corresponding to the currently-buffered service data on the resource 1 using the HARQ process with the HPID 1.

After the transmission of the TB1, when there is still an idle HARQ process for the UE and there is still to-be-transmitted service data buffered in the UE, the UE may transmit a TB2 corresponding to the currently-buffered service data on the resource 2 using the HARQ process with the HPID 2.

After the transmission of the TB2, when there is still an idle HARQ process for the UE and there is still to-be-transmitted service data buffered in the UE, the UE may transmit a TB3 corresponding to the currently-buffered service data on the resource 1 using the HARQ process with the HPID 1.

In this embodiment, when all the HARQ processes have been occupied and have not been released, the to-be-transmitted service data buffered in the UE needs to wait for an idle HARQ process for the subsequent transmission.

In this embodiment, when the TB corresponding to one HARQ process is transmitted, the initial transmission and the repetition of the same TB may be performed on one grant-free resource. The base station may detect the continuous transmission on the grant-free resource, so as to jointly detect the repeated transmissions of the same TB, thereby to improve the detection performance. In addition, the base station may detect the transmission on one grant-free resource, so as to acquire the HPID of the HARQ process used for the currently-detected data transmission.

In this embodiment, one grant-free resource may also be a grant-free resource group.

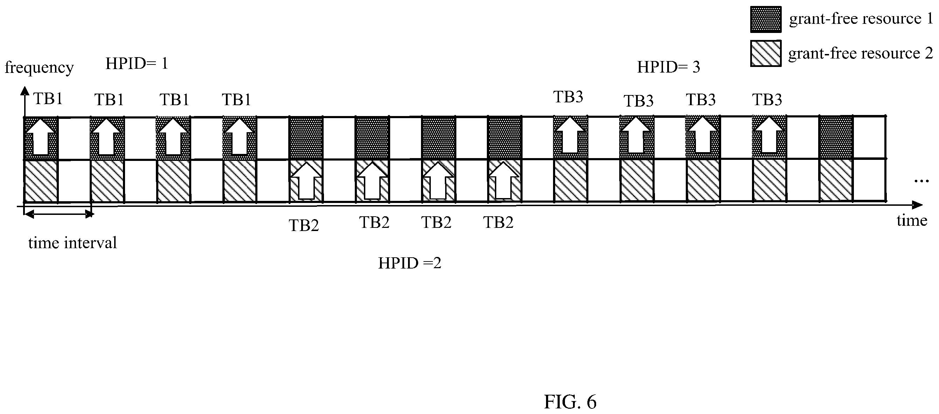

FIG. 6 is a schematic view showing the data transmission method according to a fourth embodiment of the present disclosure. In FIG. 6, the base station may configure two grant-free resources for the UE, i.e., resource 1 and resource 2. The resource 1 and the resource 2 may correspond to different time-frequency-domain resources. The UE may simultaneously support four HARQ processes with HPIDs as 1, 2, 3 and 4 respectively. The resource 1 may be used to transmit TBs corresponding to the HARQ processes with the HPIDs 1 and 3, and the resource 2 may be used to transmit TBs corresponding to the HARQ processes with the HPIDs 2 and 4. The transmission times K of the same TB (including the initial transmission and the repetition) may be 4.

The data transmission method in this embodiment will be described as follows.

When there is to-be-transmitted service data buffered in the UE, the TBs corresponding to the service data may include TB1, TB2 and TB3. The UE may transmit the TB1 on the resource 1 using the HARQ process with the HPID 1, and during the transmission of the TB1, the indication information (e.g., one bit in this embodiment) may be carried in the UCI so as to indicate that the HARQ process with the HPID 1 is transmitted on the resource 1.

After the transmission of the TB1, the UE may switch to the resource 2 and transmit the TB2 on the resource 2 using the HARQ process with the HPID 2. During the transmission of the TB2, the indication information may be carried in the UCI so as to indicate that the HARQ process with the HPID 2 is transmitted on the resource 2.

After the transmission of the TB2, when there are still other HARQ processes not yet occupied by the UE, the UE may switch to the resource 1 and transmit the TB3 on the resource 1 using the HARQ process with the HPID 3. During the transmission of the TB3, the indication information may be carried in the UCI so as to indicate that the HARQ process with the HPID 3 is transmitted on the resource 1.

In this embodiment, when the TB corresponding to one HARQ process is transmitted, the initial transmission and the repetition of the same TB may be performed on one grant-free resource. The base station may detect the continuous transmission on the grant-free resource, so as to jointly detect the repeated transmissions of the same TB, thereby to improve the detection performance. In addition, the base station may detect the transmission on one grant-free resource and the indication information carried in the UCI, so as to acquire the HPID of the HARQ process used for the currently-detected data transmission.

The present disclosure further provides in some embodiments a data detection method for a base station, including: configuring at least two grant-free resources for a UE; and detecting each TB transmitted by the UE on any grant-free resource or any grant-free resource group. Each grant-free resource group includes at least two grant-free resources, and the transmission of the TB includes initial transmission and repetition.

In the embodiments of the present disclosure, the base station may jointly detect the initial transmission and the repetition of the same TB on the one grant-free resource or the one grant-free resource group, so as to improve the detection performance.

In the embodiments of the present disclosure, the base station may be a Base Transceiver Station (BTS) in a Global System of Mobile Communication (GSM) system or a Code Division Multiple Access (CDMA) system, or a Node B (NB) in a Wideband Code Division Multiple Access (WCDMA) system, or an evolved Node B (eNB or eNodeB) in an LTE system, or a relay or an access point, or a base station in an on-coming 5G network, which will not be particularly defined herein.

In a possible embodiment of the present disclosure, subsequent to detecting each TB transmitted by the UE on any grant-free resource or any grant-free resource group, the data detection method may further include, when the transmission of one TB has been detected on one grant-free resource or one grant-free resource group, switching to another grant-free resource or another grant-free resource group and detecting the transmission of the other TB on the other grant-free resource or the other grant-free resource group.

The data detection method may further include configuring a correspondence between HARQ processes and grant-free resources or grant-free resource groups for the UE, so that the TB corresponding to one HARQ process is transmitted on the corresponding grant-free resource or the corresponding grant-free resource group.

In a possible embodiment of the present disclosure, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

In the embodiments of the present disclosure, different grant-free resources configured by the base station for the UE may correspond to different time-frequency-domain resources, e.g., correspond to different time-domain resources and a same frequency-domain resource, or correspond to different time-domain resources and different frequency-domain resources, or correspond to a same time-domain resource and different frequency-domain resources, so as to prevent the occurrence of data collision.

In addition, apart from the time-frequency-domain resource, the other parameters of the grant-free resources configured by the base station for the UE may be the same or different from each other.

In a possible embodiment of the present disclosure, subsequent to configuring the at least two grant-free resources for the UE, the data detection method may further include simultaneously adjusting a power control parameter and/or transmission power of each of the at least two grant-free resources corresponding to the same quantity of time-domain and/or frequency-domain resources, so as to reduce the signaling overhead. The parameters may include, but not limited to, reference received power (P0), a path loss compensation parameter (alpha), a transmission power adjustment value, and a transmission power adjustment step.

In a possible embodiment of the present disclosure, subsequent to configuring the at least two grant-free resources for the UE, the data detection method may further include activating or deactivating the at least two grant-free resources configured for the UE simultaneously, so as to reduce the signaling overhead.

In a possible embodiment of the present disclosure, the activating or deactivating the at least two grant-free resources may include activating or deactivating the at least two grant-free resources configured for the UE simultaneously through physical layer signaling.

The physical layer signaling may be, e.g., common/UE-dedicated Physical Downlink Control Channel (PDCCH) control signaling or Enhanced PDCCH (EPDCCH) control signaling.

Based on a same inventive concept, the present disclosure further provides in some embodiments a UE, which includes a transmission module configured to, when the UE is configured with at least two grant-free resources, transmit one TB on one grant-free resource or on one grant-free resource group. Each grant-free resource group may include at least two grant-free resources, and the transmission of the TB may include initial transmission and repetition.

According to the embodiments of the present disclosure, when the UE is configured with at least two grant-free resources, the initial transmission or repetition of one TB may be performed on one grant-free resource or on one grant-free resource group. As a result, it is able for a base station to jointly detect the initial transmission and the repetition of the same TB on the one grant-free resource or on the one grant-free resource group, thereby to improve the detection performance.

In a possible embodiment of the present disclosure, the transmission module is further configured to, after the one TB has been transmitted on the one grant-free resource, switch the transmission of a next TB buffered in the UE to another grant-free resource, or after the one TB has been transmitted on the one grant-free resource group, switch the transmission of a next TB buffered in the UE to another grant-free resource group.

In a possible embodiment of the present disclosure, the transmission module is further configured to transmit the one TB on one or more grant-free resources in the one grant-free resource group.

In a possible embodiment of the present disclosure, the UE may support at least two HARQ processes simultaneously. The transmission module is further configured to transmit a TB corresponding to one HARQ process on a corresponding grant-free resource or grant-free resource group in accordance with a correspondence between the HARQ processes and the grant-free resources or grant-free resource groups.

In a possible embodiment of the present disclosure, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

In a possible embodiment of the present disclosure, when there is at least one grant-free resource or grant-free resource group corresponding to at least two HARQ processes, the transmission module is further configured to carry indication information in UCI. The indication information is used to indicate the HARQ process used for the transmission of the TB on a current grant-free resource or a current grant-free resource group.

In a possible embodiment of the present disclosure, the UE may further include a reception module configured to receive the at least two grant-free resources configured by the base station.

In a possible embodiment of the present disclosure, different grant-free resources may correspond to different time-frequency-domain resources.

The present disclosure further provides in some embodiments a base station which includes: a configuration module configured to configure at least two grant-free resources for a UE; and a detection module configured to detect each TB transmitted by the UE on any grant-free resource or any grant-free resource group. Each grant-free resource group includes at least two grant-free resources, and the transmission of the TB includes initial transmission and repetition.

In the embodiments of the present disclosure, the base station may jointly detect the initial transmission and the repetition of the same TB on the one grant-free resource or the one grant-free resource group, so as to improve the detection performance.

In a possible embodiment of the present disclosure, the detection module is further configured to, after each TB transmitted by the UE has been detected on any grant-free resource or any grant-free resource group, switch to another grant-free resource or another grant-free resource group and detect the transmission of the other TB on the other grant-free resource or the other grant-free resource group.

In a possible embodiment of the present disclosure, the configuration module is further configured to configure a correspondence between HARQ processes and grant-free resources or grant-free resource groups for the UE, so that the TB corresponding to one HARQ process is transmitted on the corresponding grant-free resource or the corresponding grant-free resource group.

In a possible embodiment of the present disclosure, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

In a possible embodiment of the present disclosure, the configuration module is further configured to configure different time-frequency-domain resources for different grant-free resources.

In a possible embodiment of the present disclosure, the base station may further include an adjustment module configured to simultaneously adjust a power control parameter and/or transmission power of each of the at least two grant-free resources corresponding to the same quantity of time-domain and/or frequency-domain resources.

In a possible embodiment of the present disclosure, the base station may further include an activation/deactivation module configured to activate or deactivate the at least two grant-free resources configured for the UE simultaneously.

In a possible embodiment of the present disclosure, the activation/deactivation module is further configured to activate or deactivate the at least two grant-free resources configured for the UE simultaneously through physical layer signaling.

The present disclosure further provides in some embodiments, not part of the invention, a UE, including a processor, a memory, and a program stored in the memory and executed by the processor. The processor is configured to execute the program so as to implement the above-mentioned data transmission method.

The present disclosure further provides in some embodiments, not part of the invention, a base station, including a processor, a memory, and a program stored in the memory and executed by the processor. The processor is configured to execute the program so as to implement the above-mentioned data detection method.

The present disclosure further provides in some embodiments a computer-readable storage medium storing therein a computer program. The computer program is executed by a processor so as to implement the above-mentioned data transmission method with a same technical effect, which will thus not be particularly defined herein. The computer-readable storage medium may be, e.g., a Read-Only Memory (ROM), a Random Access Memory (RAM), a magnetic disk or an optical disk.

The present disclosure further provides in some embodiments, not part of the invention, a computer-readable storage medium storing therein a computer program. The computer program is executed by a processor so as to implement the above-mentioned data detection method with a same technical effect, which will thus not be particularly defined herein. The computer-readable storage medium may be, e.g., an ROM, an RAM, a magnetic disk or an optical disk.

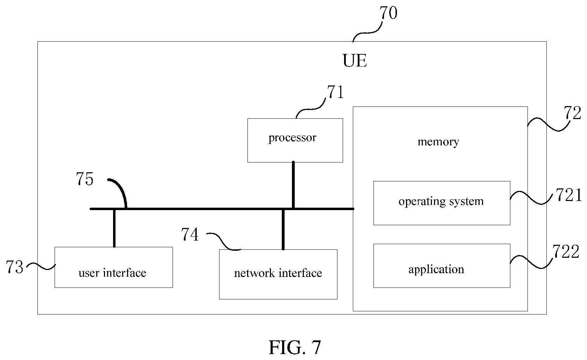

The present disclosure further provides in some embodiments, not part of the invention, a UE 70 which, as shown in FIG. 7, includes at least one processor 71, a memory 72, at least one network interface 74 and a user interface 73. The components of the UE 70 may be coupled together through a bus system 75. It should be appreciated that, the bus system 75 is configured to achieve connection and communication among the components. Apart from a data bus, the bus system 75 may further include a power source bus, a control bus and a state signal bus. For clarification, all these buses in FIG. 7 may be collectively called as bus system 75.

The user interface 73 may include a display, a keyboard or a pointing device (e.g., mouse, track ball, touch plate or touch panel).

It should be appreciated that, the memory 72 may be a volatile memory, a nonvolatile memory or both. The nonvolatile memory may be a Read-Only Memory (ROM), a Programmable ROM (PROM), an Erasable PROM (EPROM), an electrically EPROM (EEPROM) or a flash memory. The volatile memory may be a Random Access Memory (RAM) which serves as an external high-speed cache. Illustratively but non-restrictively, the RAM may include Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 72 intends to include, but not limited to, the above-mentioned and any other appropriate memories.

The following elements may be stored in the memory 72: an executable module or data structure, a subset or an extended set thereof, an operating system 721 and an application 722.

The operating system 721 may include various system programs, e.g., a framework layer, a core layer and a driving layer, so as to implement various basic services and process hardware-based tasks. The application 722 may include various applications, e.g., Media Player and Browser, so as to implement various application services. The programs for implementing the above-mentioned method may be included in the application 722.

The UE 70 may further include a computer program stored in the memory 72 and executed by the processor 71, especially a computer program stored in the application 722. The computer program is executed by the processor 71, so as to, when the UE is configured with at least two grant-free resources, transmit one TB on one grant-free resource or on one grant-free resource group. Each grant-free resource group may include at least two grant-free resources, and the transmission of the TB may include initial transmission and repetition.

The above-mentioned method may be applied to, or implemented by, the processor 71. The processor 71 may be an integrated circuit (IC) having a signal processing capability. During the implementation, the steps of the above-mentioned method may be completed through an integrated logic circuit of hardware in the processor 71 or instructions in the form of software. The processor 71 may be a general-purpose processor, a digital signal processor, an application-specific integrated circuit (ASIC), a field programmable gate array (FPGA) or any other programmable logic element, a discrete gate or transistor logic element, or a discrete hardware assembly, which may be used to implement or execute the methods, steps or logic diagrams in present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a known storage medium such as an RAM, a flash memory, an ROM, a PROM, an EEPROM, or a register. The storage medium may be located in the memory 72, and the processor 71 may read information stored in the memory 72 so as to implement the steps of the method in conjunction with the hardware.

It should be appreciated that, the embodiments of the present disclosure may be implemented by hardware, software, firmware, middleware, microcode or a combination thereof. For the hardware implementation, the processor may include one or more of an ASIC, a DSP, a DSP device (DSPD), a Programmable Logic Device (PLD), an FPGA, a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

In a possible embodiment, not part of the invention, the processor 71 is further configured to execute the computer program, so as to, after the one TB has been transmitted on the one grant-free resource, switch the transmission of a next TB buffered in the UE to another grant-free resource, or after the one TB has been transmitted on the one grant-free resource group, switch the transmission of a next TB buffered in the UE to another grant-free resource group.

In a possible embodiment, not part of the invention, the processor 71 is further configured to execute the computer program, so as to transmit the one TB on one or more grant-free resources in the one grant-free resource group.

In a possible embodiment, not part of the invention, the UE may support at least two HARQ processes simultaneously. The processor 71 is further configured to execute the computer program, so as to transmit a TB corresponding to one HARQ process on a corresponding grant-free resource or grant-free resource group in accordance with a correspondence between the HARQ processes and the grant-free resources or grant-free resource groups.

In a possible embodiment of the present disclosure, not part of the invention, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

In a possible embodiment of the present disclosure, not part of the invention, when there is at least one grant-free resource or grant-free resource group corresponding to at least two HARQ processes, the processor 71 is further configured to execute the computer program, so as to carry indication information in UCI. The indication information may be used to indicate the HARQ process used for the transmission of the TB on a current grant-free resource or a current grant-free resource group.

In a possible embodiment of the present disclosure, not part of the invention, the processor 71 is further configured to execute the computer program, so as to receive the at least two grant-free resources configured by the base station.

In a possible embodiment of the present disclosure, not part of the invention, different grant-free resources may correspond to different time-frequency-domain resources.

The UE 70 is capable of implementing the above-mentioned functions capable of being achieved by the UE, which will thus not be particularly defined herein.

According to the UE 70 when the UE is configured with at least two grant-free resources, the initial transmission or repetition of one TB may be performed on one grant-free resource or on one grant-free resource group. As a result, it is able for a base station to jointly detect the initial transmission and the repetition of the same TB on the one grant-free resource or on the one grant-free resource group, thereby to improve the detection performance.

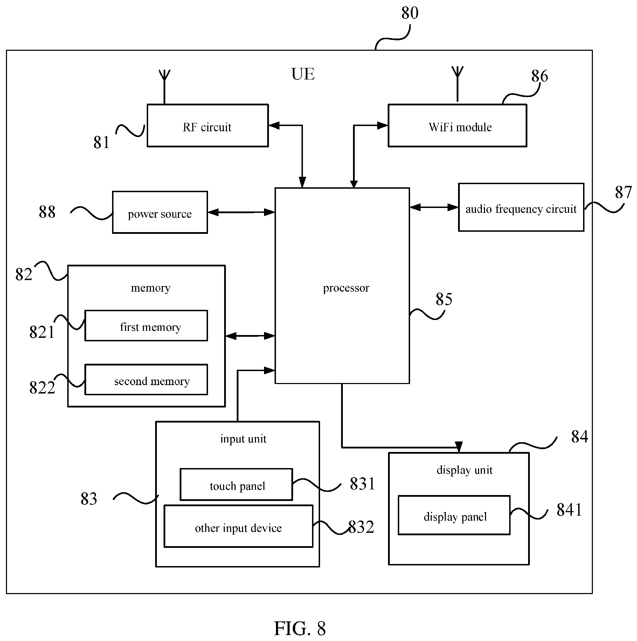

As shown in FIG. 8, the present disclosure further provides in a sixth embodiment a UE 80. The UE 80 may be a mobile phone, a flat-panel computer, a PDA or a vehicle-mounted computer.

In FIG. 8, the UE 80 may include a Radio Frequency (RF) circuit 81, a memory 82, an input unit 83, a display unit 84, a processor 85, a Wireless Fidelity (WiFi) module 86, an audio frequency circuit 87, and a power source 88.

The input unit 83 is configured to receive digital or character information inputted by a user, and generate a signal input related to user settings and function control of the UE 80.

To be specific, the input unit 83 may include a touch panel 831. The touch panel 831, also called as touch screen, is configured to collect a touch operation made by the user on or in proximity to the touch panel (e.g., an operation made by the user through any appropriate object or attachment (e.g., finger or stylus) on or in the proximity to the touch panel 831), and drive a corresponding connection device in accordance with a predetermined program. The touch panel 831 may include a touch detection unit and a touch controller. The touch detection unit is configured to detect a touch position and a signal generated due to the touch operation, and transmit the signal to the touch controller. The touch controller is configured to receive touch information from the touch detection unit, convert it into coordinates of a touch point, transmit the coordinates to the processor 85, and receive and execute a command from the processor 85. In addition, the touch panel 831 may be of a resistive type, a capacitive type, an infrared type or a surface acoustic wave (SAW) type. Apart from the touch panel 831, the input unit 83 may further include an input device 832 which may include, but not limited to, a physical keyboard, a functional button (e.g., a volume control button or an on/off button), a trackball, a mouse, and a joystick, which will not be particularly defined herein.

The display unit 84 is configured to display information inputted by the user or information to be presented to the user, and various interfaces for the UE 80, and it may include a display panel 841. In a possible embodiment of the present disclosure, the display panel 841 may be a Liquid Crystal Display (LCD) panel or an Organic Light-Emitting Diode (OLED) panel.

It should be appreciated that, the touch panel 831 may cover the display panel 841, so as to form a touch display panel. When the touch operation made on or in proximity to the touch display panel has been detected, the touch information may be transmitted to the processor 85 so as to determine a type of a touch event. Then, the processor 85 may provide corresponding visual output on the touch display panel in accordance with the type of the touch event.

The touch display panel may include an application interface display region and a commonly-used controls display region. An arrangement mode of the two display regions will not be particularly defined herein, e.g., one of the two display regions may be arranged above or under the other, or arranged to the left or the right of the other. The application interface display region may be adopted to display interfaces for applications, and each interface may include an icon for at least one application and/or an interface element such as Widget desktop control. The application interface display region may also be a blank interface where no content is contained. The commonly-used controls display region may be adopted to display controls which are used frequently, e.g., setting button, interface number, scroll bar, or such application icons as telephone book icon.

In the embodiments of the present disclosure,, not part of the invention, through calling a program or module stored in the first memory 821 and/or the data stored in the second memory 822, the processor 85 is configured to, when the UE is configured with at least two grant-free resources, transmit one TB on one grant-free resource or on one grant-free resource group. Each grant-free resource group may include at least two grant-free resources, and the transmission of the TB may include initial transmission and repetition.

In a possible embodiment of the present disclosure,, not part of the invention, the processor 85 is further configured to execute the computer program, so as to, after the one TB has been transmitted on the one grant-free resource, switch the transmission of a next TB buffered in the UE to another grant-free resource, or after the one TB has been transmitted on the one grant-free resource group, switch the transmission of a next TB buffered in the UE to another grant-free resource group.

In a possible embodiment of the present disclosure,, not part of the invention, the processor 85 is further configured to execute the computer program, so as to transmit the one TB on one or more grant-free resources in the one grant-free resource group.

In a possible embodiment of the present disclosure,, not part of the invention, the UE may support at least two HARQ processes simultaneously. The processor 85 is further configured to execute the computer program, so as to transmit a TB corresponding to one HARQ process on a corresponding grant-free resource or grant-free resource group in accordance with a correspondence between the HARQ processes and the grant-free resources or grant-free resource groups.

In a possible embodiment of the present disclosure,, not part of the invention, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

In a possible embodiment of the present disclosure,, not part of the invention, when there is at least one grant-free resource or grant-free resource group corresponding to at least two HARQ processes, the processor 85 is further configured to execute the computer program, so as to carry indication information in UCI. The indication information may be used to indicate the HARQ process used for the transmission of the TB on a current grant-free resource or a current grant-free resource group.

In a possible embodiment of the present disclosure,, not part of the invention, the processor 85 is further configured to execute the computer program, so as to receive the at least two grant-free resources configured by the base station.

In a possible embodiment of the present disclosure,, not part of the invention, different grant-free resources may correspond to different time-frequency-domain resources.

The UE 80 is capable of achieving the functions of the UE mentioned hereinabove, which will thus not be particularly defined herein.

According to the UE 80 when the UE is configured with at least two grant-free resources, the initial transmission or repetition of one TB may be performed on one grant-free resource or on one grant-free resource group. As a result, it is able for a base station to jointly detect the initial transmission and the repetition of the same TB on the one grant-free resource or on the one grant-free resource group, thereby to improve the detection performance.

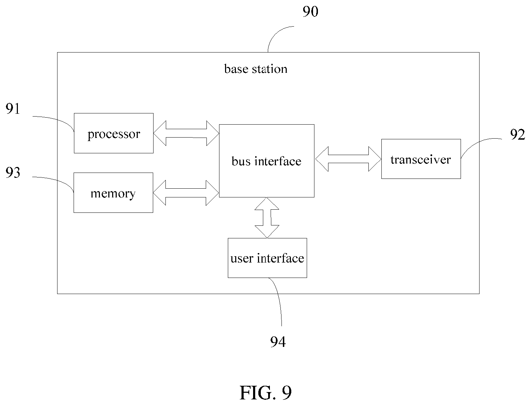

The present disclosure further provides in some embodiments, not part of the invention, a base station capable of implementing the above-mentioned data detection method with a same technical effect. As shown in FIG. 9, the base station 90 includes a processor 91, a transceiver 92, a user interface 94 and a bus interface.

In the embodiments of the present disclosure,, not part of the invention, the base station 90 may further include a computer program stored in the memory 93 and executed by the processor 91. The computer program is executed by the processor 91 so as to: configure at least two grant-free resources for a UE; and detect each TB transmitted by the UE on any grant-free resource or any grant-free resource group. Each grant-free resource group may include at least two grant-free resources, and the transmission of the TB may include initial transmission and repetition.

In FIG. 9, bus architecture may include a number of buses and bridges connected to each other, so as to connect various circuits for one or more processors 91 and one or more memories 93. In addition, as is known in the art, the bus architecture may be used to connect any other circuits, such as a circuit for a peripheral device, a circuit for a voltage stabilizer and a power management circuit. The bus interface may be provided, and the transceiver 92 may consist of a plurality of elements, i.e., a transmitter and a receiver for communication with any other devices over a transmission medium. With respect to different UEs, a user interface 94 may also be provided for devices which are to be arranged inside or outside the UE, and these devices may include but not limited to a keypad, a display, a speaker, a microphone and a joystick. The processor 91 may take charge of managing the bus architecture as well as general processings. The memory 93 may store therein data for the operation of the processor 91.

In a possible embodiment of the present disclosure,, not part of the invention, the processor 91 is further configured to execute the computer program, so as to: after the transmission of the one TB has been detected on the one grant-free resource or the one grant-free resource group, switch to another grant-free resource or grant-free resource group and detect the TB transmitted on the other grant-free resource or grant-free resource group.

In a possible embodiment of the present disclosure,, not part of the invention, the processor 91 is further configured to execute the computer program, so as to transmit a TB corresponding to one HARQ process on a corresponding grant-free resource or grant-free resource group in accordance with a correspondence between HARQ processes and grant-free resources or grant-free resource groups.

In a possible embodiment of the present disclosure,, not part of the invention, the correspondence between the HARQ processes and the grant-free resources or grant-free resource groups may include: when the quantity of the HARQ processes supported by the UE simultaneously is smaller than or equal to the quantity of the grant-free resources or grant-free resource groups configured for the UE, different HARQ processes may correspond to different grant-free resources or different grant-free resource groups; and/or when the quantity of the HARQ processes supported by the UE simultaneously is greater than the quantity of the grant-free resources or grant-free resource groups configured for the UE, there may exist at least one grant-free resource or grant-free resource group corresponding to at least two HARQ processes.

In a possible embodiment of the present disclosure,, not part of the invention, the processor 91 is further configured to execute the computer program, so as to configure different time-frequency-domain resources for different grant-free resources.

In a possible embodiment of the present disclosure,, not part of the invention, the processor 91 is further configured to execute the computer program, so as to simultaneously adjust a power control parameter and/or transmission power of each of the at least two grant-free resources corresponding to the same quantity of time-domain and/or frequency-domain resources.

In a possible embodiment of the present disclosure,, not part of the invention, the processor 91 is further configured to execute the computer program, so as to activate or deactivate the at least two grant-free resources configured for the UE simultaneously.

In a possible embodiment of the present disclosure,, not part of the invention, the processor 91 is further configured to execute the computer program, so as to activate or deactivate the at least two grant-free resources configured for the UE simultaneously through physical layer signaling.

The base station may jointly detect the initial transmission and the repetition of the same TB on the one grant-free resource or the one grant-free resource group, so as to improve the detection performance.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure as defined by the appended claims.

It should be further appreciated that, for convenience and clarification, operation procedures of the system, device and units described hereinabove may refer to the corresponding procedures in the method embodiment, and thus will not be particularly defined herein.

It should be further appreciated that, the device and method may be implemented in any other ways. For example, the embodiments for the apparatus are merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The above embodiments are for illustrative purposes only, but the present disclosure is not limited thereto.

## Claims

1. A data transmission method performed by a User Equipment, UE (70; 80), the data transmission method comprising:
transmitting one Transport Block, TB, on one grant-free resource, when the UE (70; 80) is configured with at least two grant-free resources, and the transmission of the TB comprises initial transmission and repetition,
the data transmission method being **characterized by**
the UE (70; 80) is configured to carry indication information in Uplink Control Information, UCI, and the indication information is used to indicate Hybrid Automatic Repeat reQuest, HARQ, process used for the transmission of the TB on a current grant-free resource; and
wherein at least one grant-free resource corresponds to at least two HARQ processes.

2. The data transmission method according to claim 1, wherein subsequent to transmitting the one TB on the one grant-free resource, the data transmission method further comprises:
switching the transmission of a next TB buffered in the UE (70; 80) to another grant-free resource.

3. The data transmission method according to claim 1, wherein the UE (70; 80) supports at least two HARQ processes simultaneously, and the data transmission method further comprises:
transmitting a TB corresponding to one HARQ process on a corresponding grant-free resource in accordance with a correspondence between the HARQ processes and the grant-free resources.

4. The data transmission method according to claim 3, wherein the correspondence between the HARQ processes and the grant-free resources comprises:
when the quantity of the HARQ processes supported by the UE (70; 80) simultaneously is smaller than or equal to the quantity of the grant-free resources configured for the UE (70; 80), different HARQ processes correspond to different grant-free resources; and/or
when the quantity of the HARQ processes supported by the UE (70; 80) simultaneously is greater than the quantity of the grant-free resources configured for the UE (70; 80), there exists at least one grant-free resource corresponding to at least two HARQ processes.

5. The data transmission method according to claim 1, further comprising:
receiving the at least two grant-free resources configured by a base station (90).

6. A data detection method performed by a base station (90), the data detection method comprising:
configuring at least two grant-free resources for a User Equipment, UE (70; 80); and
detecting each Transport Block, TB, transmitted by the UE (70; 80) on any grant-free resource,
wherein the transmission of the TB comprises initial transmission and repetition,
the data detection method being **characterized by**
the base station (90) is configured to receive indication information carried in Uplink Control Information, UCI, and the indication information is used to indicate Hybrid Automatic Repeat reQuest, HARQ, process used for the transmission of the TB on a current grant-free resource; and
wherein at least one grant-free resource corresponds to at least two HARQ processes.

7. The data detection method according to claim 6, wherein
subsequent to detecting each TB transmitted by the UE (70; 80) on any grant-free resource, the data detection method further comprises:
switching to another grant-free resource and detecting the transmission of the other TB on the other grant-free resource.

8. The data detection method according to claim 6, further comprising:
configuring a correspondence between the HARQ processes and grant-free resources for the UE (70; 80), so that the TB corresponding to one HARQ process is transmitted on the corresponding grant-free resource.

9. The data detection method according to claim 8, wherein the correspondence between the HARQ processes and the grant-free resources comprises:
when the quantity of the HARQ processes supported by the UE (70; 80) simultaneously is smaller than or equal to the quantity of the grant-free resources configured for the UE (70; 80), different HARQ processes correspond to different grant-free resources; and/or
when the quantity of the HARQ processes supported by the UE (70; 80) simultaneously is greater than the quantity of the grant-free resources configured for the UE (70; 80), there exists at least one grant-free resource corresponding to at least two HARQ processes.

10. The data detection method according to claim 6, wherein subsequent to configuring the at least two grant-free resources for the UE (70; 80), the data detection method further comprises:
simultaneously adjusting power control parameters and/or transmission powers of the at least two grant-free resources having a same quantity of time-domain and/or frequency-domain resources.

11. The data detection method according to claim 6, wherein subsequent to configuring the at least two grant-free resources for the UE (70; 80), the data detection method further comprises:
activating or deactivating the at least two grant-free resources configured for the UE (70; 80) simultaneously.

12. A User Equipment, UE (70; 80), comprising:
a transmission module configured to, when the UE (70; 80) is configured with at least two grant-free resources, transmit one Transport Block, TB, on one grant-free resource,
wherein the transmission of the TB comprises initial transmission and repetition,
the UE (70; 80) being **characterized by**
the UE (70; 80) is configured to carry indication information in Uplink Control Information, UCI, and the indication information is used to indicate Hybrid Automatic Repeat reQuest, HARQ, process used for the transmission of the TB on a current grant-free resource; and
wherein at least one grant-free resource corresponds to at least two HARQ processes.

13. The UE (70; 80) according to claim 12, wherein the transmission module is further configured to:
switch the transmission of a next TB buffered in the UE (70; 80) to another grant-free resource.

14. A base station (90), comprising:
a configuration module configured to configure at least two grant-free resources for a User Equipment, UE (70; 80); and
a detection module configured to detect each Transport Block, TB, transmitted by the UE (70; 80) on any grant-free resource,
wherein the transmission of the TB comprises initial transmission and repetition,
the base station (90) being **characterized by**
the base station (90) is configured to receive indication information carried in Uplink Control Information, UCI, and the indication information is used to indicate Hybrid Automatic Repeat reQuest, HARQ, process used for the transmission of the TB on a current grant-free resource; and
wherein at least one grant-free resource corresponds to at least two HARQ processes.

## Patentansprüche

1. Datenübertragungsverfahren, das von einem Benutzergerät, UE (70; 80), durchgeführt wird, wobei das Datenübertragungsverfahren Folgendes umfasst:
Übertragen eines Transportblocks, TB, auf eine Grant-Free-Ressource, wenn das UE (70; 80) mit mindestens zwei Grant-Free-Ressourcen konfiguriert ist, und die Übertragung des TB eine anfängliche Übertragung und Wiederholung umfasst,
wobei das Datenübertragungsverfahren **dadurch gekennzeichnet ist, dass**
das UE (70; 80) konfiguriert ist, um Anzeigeinformationen in Uplink-Steuerinformationen, UCI, zu übertragen, und die Anzeigeinformationen verwendet werden, um einen Hybrid Automatic Repeat reQuest, HARQ, -Prozess anzuzeigen, der für die Übertragung des TB auf eine aktuelle Grant-Free-Ressource verwendet wird; und
wobei mindestens eine Grant-Free-Ressource mindestens zwei HARQ-Prozessen entspricht.

2. Datenübertragungsverfahren nach Anspruch 1, wobei das Datenübertragungsverfahren nach dem Übertragen des einen TB auf die eine Grant-Free-Ressource ferner Folgendes umfasst:
Umschalten der Übertragung eines nächsten im UE (70; 80) zwischengespeicherten TB auf eine andere Grant-Free-Ressource.

3. Datenübertragungsverfahren nach Anspruch 1, wobei das UE (70; 80) mindestens zwei HARQ-Prozesse gleichzeitig unterstützt, und das Datenübertragungsverfahren ferner Folgendes umfasst:
Übertragen eines TB, das einem HARQ-Prozess entspricht, auf eine entsprechende Grant-Free-Ressource gemäß einer Übereinstimmung zwischen den HARQ-Prozessen und den Grant-Free-Ressourcen.

4. Datenübertragungsverfahren nach Anspruch 3, wobei die Übereinstimmung zwischen den HARQ-Prozessen und den Grant-Free-Ressourcen Folgendes umfasst:
wenn die Menge der vom UE (70; 80) gleichzeitig unterstützten HARQ-Prozesse kleiner oder gleich der Menge der für das UE (70; 80) konfigurierten Grant-Free-Ressourcen ist, entsprechen unterschiedliche HARQ-Prozesse unterschiedlichen Grant-Free-Ressourcen; und/oder
wenn die Menge der vom UE (70; 80) gleichzeitig unterstützten HARQ-Prozesse größer ist als die Menge der für das UE (70; 80) konfigurierten Grant-Free-Ressourcen, existiert mindestens eine Grant-Free-Ressource entsprechend mindestens zwei HARQ-Prozessen.

5. Datenübertragungsverfahren nach Anspruch 1, ferner umfassend:
Empfangen der mindestens zwei Grant-Free-Ressourcen, die durch eine Basisstation (90) konfiguriert sind.

6. Datendetektionsverfahren, das von einer Basisstation (90) durchgeführt wird, wobei das Datendetektionsverfahren Folgendes umfasst:
Konfigurieren von mindestens zwei Grant-Free-Ressourcen für ein Benutzergerät, UE (70; 80); und
Detektieren eines jeden Transportblocks, TB, der vom UE (70; 80) auf eine beliebige Grant-Free-Ressource übertragen wird,
wobei die Übertragung des TB eine anfängliche Übertragung und Wiederholung umfasst,
wobei das Datendetektionsverfahren **dadurch gekennzeichnet ist, dass**
die Basisstation (90) konfiguriert ist, um Anzeigeinformationen, die in Uplink-Steuerinformationen, UCI, getragen werden, zu empfangen und die Anzeigeinformationen verwendet werden, um einen Hybrid Automatic Repeat reQuest, HARQ, -Prozess anzuzeigen, der für die Übertragung des TB auf eine aktuelle Grant-Free-Ressource verwendet wird; und
wobei mindestens eine Grant-Free-Ressource mindestens zwei HARQ-Prozessen entspricht.

7. Datendetektionsverfahren nach Anspruch 6, wobei
nach dem Detektieren eines jeden TB, der durch das UE (70; 80) auf eine beliebige Grant-Free-Ressource übertragen wird, umfasst das Datendetektionsverfahren ferner Folgendes:
Umschalten zu einer anderen Grant-Free-Ressource und Detektieren der Übertragung des anderen TB auf die andere Grant-Free-Ressource.

8. Datendetektionsverfahren nach Anspruch 6, ferner umfassend:
Konfigurieren einer Übereinstimmung zwischen den HARQ-Prozessen und Grant-Free-Ressourcen für das UE (70; 80), so dass der TB, der einem HARQ-Prozess entspricht, auf die entsprechende Grant-Free-Ressource übertragen wird.

9. Datendetektionsverfahren nach Anspruch 8, wobei die Übereinstimmung zwischen den HARQ-Prozessen und den Grant-Free-Ressourcen Folgendes umfasst:
wenn die Menge der vom UE (70; 80) gleichzeitig unterstützten HARQ-Prozesse kleiner oder gleich der Menge der für das UE (70; 80) konfigurierten Grant-Free-Ressourcen ist, entsprechen unterschiedliche HARQ-Prozesse unterschiedlichen Grant-Free-Ressourcen; und/oder
wenn die Menge der vom UE (70; 80) gleichzeitig unterstützten HARQ-Prozesse größer ist als die Menge der für das UE (70; 80) konfigurierten Grant-Free-Ressourcen, existiert mindestens eine Grant-Free-Ressource entsprechend mindestens zwei HARQ-Prozessen.

10. Datendetektionsverfahren nach Anspruch 6, wobei das Datendetektionsverfahren nach dem Konfigurieren der mindestens zwei Grant-Free-Ressourcen für das UE (70; 80) ferner Folgendes umfasst:
gleichzeitiges Einstellen von Leistungssteuerparametern und/oder Übertragungsleistungen der mindestens zwei Grant-Free-Ressourcen, die eine gleiche Menge an Zeitdomänen- und/oder Frequenzdomänenressourcen aufweisen.

11. Datendetektionsverfahren nach Anspruch 6, wobei das Datendetektionsverfahren nach dem Konfigurieren der mindestens zwei Grant-Free-Ressourcen für das UE (70; 80) ferner Folgendes umfasst:
Aktivieren oder Deaktivieren der mindestens zwei für das UE (70; 80) konfigurierten Grant-Free-Ressourcen gleichzeitig.

12. Benutzergerät, UE (70; 80), umfassend:
ein Übertragungsmodul, das dazu konfiguriert ist, wenn das UE (70; 80) mit mindestens zwei Grant-Free-Ressourcen konfiguriert ist, einen Transportblock, TB, auf eine Grant-Free-Ressource zu übertragen,
wobei die Übertragung des TB eine anfängliche Übertragung und Wiederholung umfasst,
wobei das UE (70; 80) **dadurch gekennzeichnet ist, dass**:
das UE (70; 80) konfiguriert ist, um Anzeigeinformationen in Uplink-Steuerinformationen, UCI, zu übertragen, und die Anzeigeinformationen verwendet werden, um einen Hybrid Automatic Repeat reQuest, HARQ, -Prozess anzuzeigen, der für die Übertragung des TB auf eine aktuelle Grant-Free-Ressource verwendet wird; und
wobei mindestens eine Grant-Free-Ressource mindestens zwei HARQ-Prozessen entspricht.

13. UE (70; 80) nach Anspruch 12, wobei das Übertragungsmodul ferner konfiguriert ist zum:
Umschalten der Übertragung eines nächsten im UE (70; 80) zwischengespeicherten TB auf eine andere Grant-Free-Ressource.

14. Basisstation (90), umfassend:
ein Konfigurationsmodul, das konfiguriert ist, um mindestens zwei Grant-Free-Ressourcen für ein Benutzergerät, UE (70; 80), zu konfigurieren; und
ein Detektionsmodul, das konfiguriert ist, um einen jeden Transportblock, TB, zu detektieren, der vom UE (70; 80) auf eine beliebige Grant-Free-Ressource übertragen wird,
wobei die Übertragung des TB eine anfängliche Übertragung und Wiederholung umfasst,
wobei die Basisstation (90) **dadurch gekennzeichnet ist, dass**:
die Basisstation (90) konfiguriert ist, um Anzeigeinformationen zu empfangen, die in Uplink-Steuerinformationen, UCI, getragen werden, und die Anzeigeinformationen werden verwendet, um einen Hybrid Automatic Repeat reQuest, HARQ, -Prozess anzuzeigen, der für die Übertragung des TB auf eine aktuelle Grant-Free-Ressource verwendet wird; und
wobei mindestens eine Grant-Free-Ressource mindestens zwei HARQ-Prozessen entspricht.

## Revendications

1. Procédé de transmission de données, exécuté par un équipement utilisateur, UE (70 ; 80), le procédé de transmission de données comprenant :
transmettre un bloc de transport, TB, sur une ressource sans autorisation, lorsque l'UE (70 ; 80) est configuré avec au moins deux ressources sans autorisation, et la transmission du TB comprend une transmission initiale et une répétition,
le procédé de transmission de données étant **caractérisé en ce que**
l'UE (70 ; 80) est configuré pour transporter des informations d'indication dans des informations de commande de liaison montante, UCI, et les informations d'indication sont utilisées pour indiquer le processus de demande de répétition automatique hybride, HARQ, utilisé pour la transmission du TB sur une ressource actuelle sans autorisation ; et
dans lequel au moins une ressource sans autorisation correspond à au moins deux processus HARQ.

2. Procédé de transmission de données selon la revendication 1, dans lequel, après la transmission du susdit TB sur la susdite ressource sans autorisation, le procédé de transmission de données comprend en outre :
commuter la transmission d'un TB suivant mis en mémoire tampon dans l'UE (70 ; 80) vers une autre ressource sans autorisation.

3. Procédé de transmission de données selon la revendication 1, dans lequel l'UE (70 ; 80) supporte au moins deux processus HARQ simultanément, et le procédé de transmission de données comprend en outre :
transmettre un TB correspondant à un processus HARQ sur une ressource sans autorisation correspondante conformément à une correspondance entre les processus HARQ et les ressources sans autorisation.

4. Procédé de transmission de données selon la revendication 3, dans lequel la correspondance entre les processus HARQ et les ressources sans autorisation comprend :
lorsque la quantité de processus HARQ supportés simultanément par l'UE (70 ; 80) est inférieure ou égale à la quantité de ressources sans autorisation configurées pour l'UE (70 ; 80), différents processus HARQ correspondent à différentes ressources sans autorisation ; et/ou
lorsque la quantité de processus HARQ supportés simultanément par l'UE (70 ; 80) est supérieure à la quantité de ressources sans autorisation configurées pour l'UE (70 ; 80), il existe au moins une ressource sans autorisation correspondant à au moins deux processus HARQ.

5. Procédé de transmission de données selon la revendication 1, comprenant en outre :
recevoir les au moins deux ressources sans autorisation configurées par une station de base (90).

6. Procédé de détection de données exécuté par une station de base (90), le procédé de détection de données comprenant :
configurer au moins deux ressources sans autorisation pour un équipement utilisateur, UE (70 ; 80) ; et
détecter chaque bloc de transport, TB, transmis par l'UE (70 ; 80) sur une quelconque ressource sans autorisation,
dans lequel la transmission du TB comprend une transmission initiale et une répétition,
le procédé de détection de données étant **caractérisé en ce que**
la station de base (90) est configuré pour recevoir des informations d'indication transportées dans des informations de commande de liaison montante, UCI, et les informations d'indication sont utilisées pour indiquer le processus de demande de répétition automatique hybride, HARQ, utilisé pour la transmission du TB sur une ressource actuelle sans autorisation ; et dans lequel au moins une ressource sans autorisation correspond à au moins deux processus HARQ.

7. Procédé de détection de données selon la revendication 6, dans lequel
après la détection de chaque TB transmis par l'UE (70 ; 80) sur une quelconque ressource sans autorisation, le procédé de détection des données comprend en outre :
commuter à une autre ressource sans autorisation et détecter la transmission de l'autre TB sur l'autre ressource sans autorisation.

8. Procédé de détection des données selon la revendication 6, comprenant en outre :
configurer une correspondance entre les processus HARQ et les ressources sans autorisation pour l'UE (70 ; 80), de sorte que le TB correspondant au susdit processus HARQ soit transmis sur la ressource sans autorisation correspondante.

9. Procédé de détection de données selon la revendication 8, dans lequel la correspondance entre les processus HARQ et les ressources sans autorisation comprend :
lorsque la quantité de processus HARQ supportés simultanément par l'UE (70 ; 80) est inférieure ou égale à la quantité de ressources sans autorisation configurées pour l'UE (70 ; 80), différents processus HARQ correspondent à différentes ressources sans autorisation ; et/ou
lorsque la quantité de processus HARQ supportés simultanément par l'UE (70 ; 80) est supérieure à la quantité de ressources sans autorisation configurées pour l'UE (70 ; 80), il existe au moins une ressource sans autorisation correspondant à au moins deux processus HARQ.

10. Procédé de détection de données selon la revendication 6, dans lequel, après la configuration des au moins deux ressources sans autorisation pour l'UE (70 ; 80), le procédé de détection de données comprend en outre :
régler simultanément des paramètres de commande de puissance et/ou des puissances de transmission des au moins deux ressources sans autorisation comportant une même quantité de ressources de domaine temporel et/ou de domaine fréquentiel.

11. Procédé de détection de données selon la revendication 6, dans lequel, après la configuration des au moins deux ressources sans autorisation pour l'UE (70 ; 80), le procédé de détection de données comprend en outre :
activer ou désactiver simultanément les au moins deux ressources sans autorisation configurées pour l'UE (70 ; 80).

12. Équipement utilisateur, UE (70 ; 80), comprenant :
un module de transmission configuré pour, lorsque l'UE (70 ; 80) est configuré avec au moins deux ressources sans autorisation, transmettre un bloc de transport, TB, sur une ressource sans autorisation,
dans lequel la transmission du TB comprend une transmission initiale et une répétition,
l'UE (70 ; 80) étant **caractérisé en ce que**
l'UE (70 ; 80) est configuré pour transporter des informations d'indication dans des informations de commande de liaison montante, UCI, et les informations d'indication sont utilisées pour indiquer le processus de demande de répétition automatique hybride, HARQ, utilisé pour la transmission du TB sur une ressource actuelle sans autorisation ; et
dans lequel au moins une ressource sans autorisation correspond à au moins deux processus HARQ.

13. UE (70 ; 80) selon la revendication 12, dans lequel le module de transmission est en outre configuré pour : commuter la transmission d'un TB suivant mis en mémoire tampon dans l'UE (70 ; 80) vers une autre ressource sans autorisation.

14. Station de base (90), comprenant :
un module de configuration configuré pour configurer au moins deux ressources sans autorisation pour un équipement utilisateur, UE (70 ; 80) ; et
un module de détection configuré pour détecter chaque bloc de transport, TB, transmis par l'UE (70 ; 80) sur une quelconque ressource sans autorisation,
dans lequel la transmission du TB comprend une transmission initiale et une répétition,
la station de base (90) étant **caractérisée en ce que**
la station de base (90) est configurée pour recevoir des informations d'indication transportées dans des informations de commande de liaison montante, UCI, et les informations d'indication sont utilisées pour indiquer un processus de demande de répétition automatique hybride, HARQ, utilisé pour la transmission du TB sur une ressource actuelle sans autorisation ; et
dans lequel au moins une ressource sans autorisation correspond à au moins deux processus HARQ.
